# FASCICULE DE BREVET EUROPEEN

(11) **EP 0 457 641 B1**
(45) Date de publication et mention de la délivrance du brevet: **28.12.1994**
(21) Numéro de dépôt: 91401158.0
(22) Date de dépôt: 02.05.1991
(51) Int. Cl.: B01D 29/11

(54) **Filtre auto-nettoyant et installation de filtration comprenant un filtre de ce genre**
Selbstreinigender Filter und Anwendung desselben in einer Filteranlage
Self-cleaning filter and device containing said filter

(30) Priorité: 15.05.1990 FR 9006037
(43) Date de publication de la demande: 21.11.1991
(73) Titulaire: GUINARD CENTRIFUGATION Société dite :, F-36000 Chateauroux (FR)
(72) Inventeur: Autret, Marcel Marie, F-36100 Brives (FR)
(74) Mandataire: Bourgognon, Jean-Marie

(56) Documents cités:
- CH-A- 620 859
- DE-U- 8 438 010
- FR-A- 2 621 830
- FR-A- 2 643 284
- GB-A- 2 065 486

## Description

Au brevet français FR-A-2621 830, on décrit une installation de filtration d'une suspension comprenant un filtre à bande presseuse et, en amont de celui-ci, un égoutteur muni d'une vis de pressage de la suspension à filtrer, un floculateur précédant l'égoutteur.

Cette installation a fait ses preuves pour traiter des boues urbaines et industrielles. Mais elle présente les inconvénients suivants. A de grands débits, la quantité d'eau, séparée dans l'égoutteur, contenant encore des matières solides en suspension et envoyée sur le brin d'entrée du filtre à bandes presseuses, est si importante que d'une part elle remouille les sédiments déposés juste à côté sur ce brin et que d'autre part elle nécessite de donner aux bandes presseuses des ouvertures de maille plus grandes, afin de permettre à l'eau de s'évacuer en une quantité suffisante, qu'il n'est souhaitable pour l'opération de pressage entre les deux bandes qui doit s'effectuer en aval.

L'invention pallie ces inconvénients, tout en permettant d'obtenir des performances encore supérieures à celles de l'installation décrite au brevet mentionné ci-dessus.

L'invention a donc pour objet un filtre auto-nettoyant suivant la revendication 1.

Dans ce filtre auto-nettoyant d'un type nouveau, la partie non perforée de la face latérale laisse à l'agent de floculation, qui a été ajouté à la boue en amont du filtre auto-nettoyant, le temps de jouer son rôle et d'agglomérer la boue de sorte que, lorsque les flocons arrivent devant la partie perforée, ils ne peuvent pas passer à travers celle-ci, tandis que l'eau y passe. La boue encore non floculée est maintenue dans le filtre auto-nettoyant, puisqu'elle se trouve en regard de la partie non perforée de la face latérale de l'enveloppe. Ce ne serait pas le cas dans un filtre du type décrit au GB-A-2065 486, dans lequel les raccords d'entrée et de sortie sont au même niveau le long de l'axe. De préférence, la partie non perforée de la face latérale de l'enveloppe se trouvant du côté du bas a une hauteur de 500 à 800 mm pour bien laisser à l'agent de floculation le temps de jouer son rôle. La partie perforée a habituellement une hauteur de 150 à 300 mm et peut être à une distance du sommet de 80 à 200 mm environ, le raccord de sortie des flocons pour les envoyer à l'égoutteur étant ménagé près du sommet.

Des perfectionnements sont indiquès aux revendications 2 à 9.

Suivant un mode de réalisation particulièrement efficace, un dispositif de brassage est prévu dans l'enveloppe entre le bas et la partie non perforée. Ce dispositif de brassage est destiné à augmenter la vitesse de floculation de la boue par l'agent de floculation.

Un perfectionnement vise également une installation de filtration comprenant un égoutteur à vis, suivi de préférence d'un dispositif de filtration à double bandes presseuses et ayant, en amont de l'égoutteur à vis, un filtre auto-nettoyant, suivant l'invention.

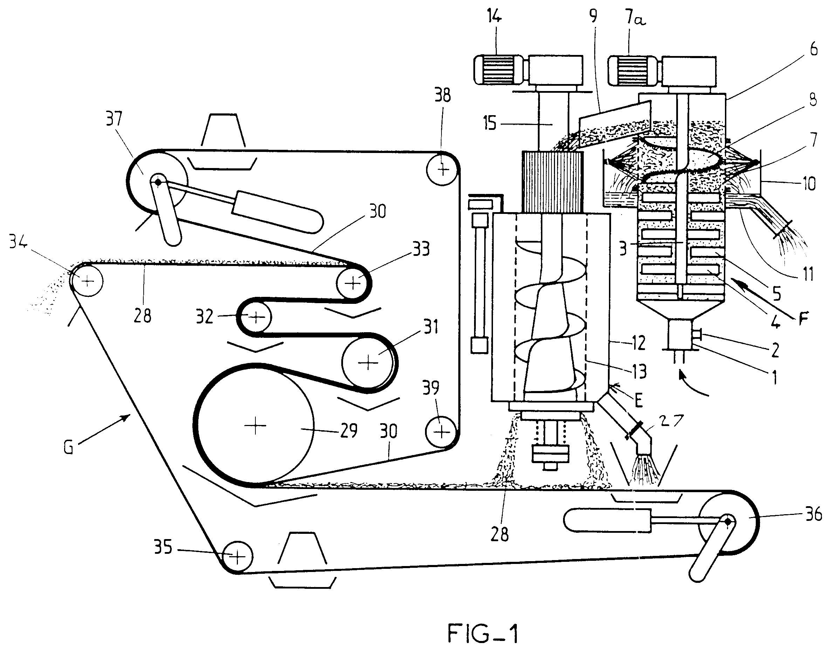

La figure unique du dessin annexé est un schéma d'une installation suivant ce perfectionnement.

Cette installation de filtration comprend essentiellement un filtre auto-nettoyant F suivant l'invention, un égoutteur à vis E et un filtre à bandes presseuses G.

Le produit à traiter brut est introduit par une bride 1 dans le filtre auto-nettoyant servant de floculateur, le floculant étant injecté simultanément par l'orifice 2. L'ensemble est mélangé dans le floculateur F grâce à un dispositif de brassage constitué essentiellement d'un arbre 3 vertical muni de lames 4 horizontales passant entre des chicanes 5 fixes issues de la face latérale intérieure d'une enveloppe 6 cylindrique. L'arbre 3 est entrainé en rotation par des moyens d'entraînement 7a. La face latérale comporte, au-dessus du dispositif de brassage, une partie perforée 7 annulaire. L'arbre 3 porte également une vis hélicoïdale munie de brosses 8 venant en contact avec cette partie perforée 7 annulaire. Au-dessus de la partie perforée, l'enveloppe se poursuit par une partie non perforée supérieure de laquelle est issu un déversoir 9 qui déverse la suspension dans l'égoutteur E. L'enveloppe 6 est entourée d'une cuve 10 dont le fond 11 est à un niveau inférieur au niveau le plus bas de la partie perforée 7.

L'égoutteur est du type décrit au brevet français précité. Il comprend essentiellement dans une enveloppe 12 d'axe vertical un cylindre 13 perforé d'axe vertical. Des moyens d'entraînement 14 entraînent un arbre 15 à l'intérieur du cylindre 13. L'arbre 15 s'évase vers le bas en un noyau portant une vis. Le bord libre de la vis porte des brosses qui viennent frotter contre la paroi intérieure du cylindre et en décolmatent les fentes. Le produit égoutté dans l'égoutteur peut s'écouler par un orifice annulaire prévu au fond de l'égoutteur et tomber sur une bande 28 de la presse à bandes presseuses G. Le liquide exprimé de la suspension dans l'égoutteur est évacué par un conduit d'évacuation 27.

La suspension égouttée tombe sur une bande 28 de la presse à bandes presseuses G, tandis que le conduit 27 débouche également sur cette bande 28, mais en amont de l'endroit où débouche la suspension égouttée.

La quantité de liquide exprimé est bien moindre qu'auparavant, en sorte qu'il peut s'écouler à travers la bande 28, même si celle-ci est à mailles fines, sans s'accumuler ni remouiller le produit égoutté déposé juste en aval sur la bande 28.

La bande 28 s'enroule sur le rouleau 29, cependant qu'une bande 30 vient s'interposer entre le rouleau 29 et la bande 28. Les deux bandes passent ensuite ensemble successivement sur le rouleaux 31, 32 et 33. La bande 28 sort du rouleau 33 pour passer sur un rouleau 34, puis sur un rouleau 35 et revenir sous l'égoutteur E par un rouleau de renvoi 36, l'un de ces rouleaux étant moteur. La bande 30 sort du rouleau 33 et est retournée au rouleau 29 en passant par un rouleau 37, un rouleau 38 et un rouleau 39, l'un de ces rouleaux étant également moteur.

La suspension égouttée est ainsi serrée entre les bandes 28 et 30, alors qu'elle passe sur les rouleaux 29 à 33. La suspension pressée entre ces rouleaux sort sur la bande 28 et est éjectée à la sortie du rouleau 34.

## Revendications

1. Filtre auto-nettoyant, constitué d'une enveloppe (6) cylindrique à face latérale perforée et dans l'axe vertical duquel est monté tournant un arbre (3) portant une vis à brosse (8) venant en contact de brossage avec la face latérale perforée et ayant un raccord d'entrée (1) et un raccord de sortie (9), l'agencement de la vis (8) et de l'enveloppe (6) étant tel qu'il ne produit pas un effet de compression progressif du produit à filtrer le long du filtre, caractérisé en ce que
- il est prévu un orifice (2) d'injection de floculant dans le raccord d'entrée (1),
- le raccord d'entrée (1) est au bas de l'enveloppe (6) et le raccord de sortie (9) est plus proche du sommet que du bas de l'enveloppe, et
- la face latérale (6) n'est perforée que sur une partie annulaire (7) plus éloignée du bas que du sommet de l'enveloppe et la vis à brosse (8) ne vient en contact qu'avec cette partie (7) perforée.

2. Filtre auto-nettoyant suivant la revendication 1, caractérisé en ce que la partie non perforée de l'enveloppe a une hauteur de 500 à 800 mm.

3. Filtre auto-nettoyant suivant la revendication 1 ou 2, caractérisé en ce que la partie perforée (7) de l'enveloppe a une hauteur de 150 à 300 mm.

4. Filtre auto-nettoyant suivant l'une des revendications 1 a 3, caractérise en ce que la partie perforée (7) est a distance du sommet de l'enveloppe, de préférence de 80 à 200 mm.

5. Filtre auto-nettoyant suivant l'une des revendications 1 à 4, caractérisé en ce que l'enveloppe (6) est entourée d'une cuve (10) dont le fond (11) est à un niveau inférieur au niveau le plus bas de la partie perforée (7).

6. Filtre auto-nettoyant suivant l'une des revendications 1 à 5, caractérisé par des buses de projection de liquide sur la face extérieure de la partie perforée (6).

7. Filtre auto-nettoyant suivant les revendications 5 et 6 prises ensemble, caractérisé en ce que les buses sont montées sur la cuve (10).

8. Filtre auto-nettoyant suivant l'une des revendications 1 à 7, caractérisé par un dispositif de brassage (4,5) prévu dans l'enveloppe entre le bas de celle-ci et la partie perforée (7).

9. Installation de filtration comprenant un égoutteur à vis (E) suivi de préférence d'un dispositif de filtration à double bande presseuse (G), caractérisée en ce qu'elle comprend en amont de l'égoutteur à vis un filtre auto-nettoyant (F), suivant l'une des revendications précédentes.

## Claims

1. Self-cleaning filter, consisting of a cylindrical casing (6) with a perforated lateral face and in the vertical axis of which is rotatably mounted a shaft (3) carrying a screw with brushes (8) coming into brushing contact with the perforated lateral face and having an inlet connection (1) and an outlet connection (9), the arrangement of the screw (8) and of the casing (6) being such that it does not give rise to a progressive compression of the substance to be filtered along the filter, characterised in that
- an orifice (2) is provided for admitting flocculant into the inlet connection (1),
- the inlet connection (1) is at the bottom of the casing (6) and the outlet connection (9) is closer to the top than to the bottom of the casing, and
- the lateral face (6) is perforated only over an annular part (7) further away from the bottom than from the top of the casing and the screw with brushes (8) comes into contact only with this perforated part (7).

2. Self-cleaning filter according to Claim 1, characterised in that the unperforated part of the casing has a height of 500 to 800 mm.

3. Self-cleaning filter according to Claim 1 or 2, characterised in that the perforated part (7) of the casing has a height of 150 to 300 mm.

4. Self-cleaning filter according to one of Claims 1 to 3, characterised in that the perforated part (7) is at a distance from the top of the casing, preferably 80 to 200 mm.

5. Self-cleaning filter according to one of Claims 1 to 4, characterised in that the casing (6) is surrounded by a vat (10), the bottom (11) of which is at a level lower than the lowest level of the perforated part (7).

6. Self-cleaning filter according to one of Claims 1 to 5, characterised by nozzles for spraying liquid on the external face of the perforated part (6).

7. Self-cleaning filter according to Claims 5 and 6 taken together, characterised in that the nozzles are mounted on the vat (10).

8. Self-cleaning filter according to one of Claims 1 to 7, characterised by a stirring device (4, 5) provided in the casing between the bottom of the latter and the perforated part (7).

9. Filtration installation comprising a screw drainage device (E) preferably followed by a filtration device with a twin pressure belt (G), characterised in that it comprises, upstream of the screw drainage device, a self-cleaning filter (F) according to one of the preceding claims.

## Patentansprüche

1. Selbstreinigendes Filter, mit einem zylindrischen Gehäuse (6), bei welchem die Seitenwand mit Durchbrechungen versehen ist, auf dessen vertikal ausgerichteter Achse eine Welle (3) drehbar angeordnet ist, welche eine Borstenwendel (8) trägt, die in bürstender Berührung mit der mit Durchbrechungen versehenen Seitenwand steht, und das einen Einlaßanschluß (1) und einen Auslaßanschluß (9) aufweist, wobei die Ausbildung der Wendel (8) und des Gehäuses (6) so gewählt ist, daß sich keine progressive Verdichtung des zu filternden Produktes längs des Filters ergibt, dadurch gekennzeichnet, daß
- in dem Einlaßanschluß (1) eine Einspeiseöffnung (2) für ein Ausflockungsmittel vorgesehen ist,
- der Einlaßanschluß (1) unten am Gehäuse (6) vorgesehen ist und der Auslaßanschluß (9) näher beim oberen Ende als beim unteren Ende des Gehäuses liegt, und
- die seitliche Gehäusewand (6) nur in einem Ringbereich (7) mit Durchbrechungen versehen ist, der vom unteren Ende des Gehäuses (6) weiter entfernt ist als von dessen oberem Ende, und die Borstenwendel (8) nur mit diesem mit Durchbrechungen versehenen Ringbereich (7) in Berührung steht.

2. Selbstreinigendes Filter nach Anspruch 1, dadurch gekennzeichnet, daß der nicht mit Durchbrechungen versehene Teil des Gehäuses eine Höhe von 500 bis 800 mm aufweist.

3. Selbstreinigendes Filter nach Anspruch 1 oder 2, dadurch gekennzeichnet, daß der mit Durchbrechungen versehene Bereich (7) des Gehäuses eine Höhe von 150 bis 300 mm hat.

4. Selbstreinigendes Filter nach einem der Ansprüche 1 bis 3, dadurch gekennzeichnet, daß der mit Durchbrechungen versehene Bereich (7) vom oberen Ende des Gehäuses beabstandet ist, vorzugsweise um eine Strecke von 80 bis 200 mm.

5. Selbstreinigendes Filter nach einem der Ansprüche 1 bis 4, dadurch gekennzeichnet, daß das Gehäuse (6) von einer Wanne (10) umgeben ist, deren Boden sich auf einem Niveau befindet, das unter der tiefsten Stelle des mit Durchbrechungen versehenen Bereiches (7) liegt.

6. Selbstreinigendes Filter nach einem der Ansprüche 1 bis 5, dadurch gekennzeichnet, daß auf der Außenseite des mit Durchbrechungen versehenen Bereiches (7) Flüssigkeitsstrahlen abgebende Düsen angeordnet sind.

7. Selbstreinigendes Filter nach Anspruch 5 in Verbindung mit Anspruch 6, dadurch gekennzeichnet, daß die Flüssigkeit abgebenden Düsen auf der Wanne (10) angebracht sind.

8. Selbstreinigendes Filter nach einem der Ansprüche 1 bis 7, dadurch gekennzeichnet, daß in dem Gehäuse zwischen dem unteren Ende desselben und dem mit Durchbrechungen versehenen Bereich (7) eine Rühreinrichtung (4, 5) vorgesehen ist.

9. Filteranlage mit einem Schraubenentwässerer (E), an welchen sich vorzugsweise eine Filtrationsvorrichtung (G) anschließt, die nach dem Prinzip der Doppelbandfilterpresse arbeitet, dadurch gekennzeichnet, daß in Förderrichtung gesehen stromauf des Schraubenentwässerers ein selbstreinigendes Filter (F) nach einem der vorstehenden Ansprüche angeordnet ist.
